# EUROPEAN PATENT APPLICATION

(11) **EP 4 800 268 A1**
(43) Date of publication of application: **02.09.2026**
(21) Application number: 26154366.4
(22) Date of filing: 27.01.2026
(51) Int. Cl.: F16H 61/00, F16H 63/34

(54) **SOLENOID RETAINER CLIP, TRANSMISSIONS AND PARK SYSTEMS INCORPORATING THE SAME, AND ASSEMBLY METHODS THEREFOR**

(30) Priority: 28.02.2025 US 202519066442
(71) Applicant: Allison Transmission Inc., Indianapolis, IN 46123 (US)
(72) Inventor: MANTA, Ionut, Avon, 46123 (US); TAYLOR, Charles, Carmel, 46123 (US)
(74) Representative: HGF

(57) **Abstract**

Transmissions, park systems, and methods of assembling park systems are disclosed. A transmission includes an input shaft to receive torque from a drive unit, an output shaft to transmit torque to a load, and a park system to selectively brake the output shaft. The park system includes an electro-hydraulic valve assembly including a solenoid (410) to selectively deliver one or more fluid pressures to a movable element to drive operation of the park system in a plurality of operating modes and a solenoid retainer clip (450) pivotally coupled to the solenoid for rotation therewith about a first rotational axis.

## Description

### FIELD OF THE DISCLOSURE

The present disclosure relates, generally, to electro-hydraulic systems of transmissions, and, more specifically, to solenoids of such electro-hydraulic systems.

### BACKGROUND

One or more solenoids may be incorporated into electro-hydraulic valve assemblies of a transmission to selectively deliver fluid pressure to one or more movable elements of the valve assemblies. Systems, devices, and/or methods that avoid drawbacks associated with existing solenoids remain an area of interest.

### SUMMARY

The present disclosure may comprise one or more of the following features and combinations thereof.

According to one aspect of the present disclosure, a transmission may include an input shaft to receive torque from a drive unit, an output shaft to transmit torque to a load, and a park system to selectively brake the output shaft. The park system may include an electro-hydraulic valve assembly and a solenoid retainer clip. The electro-hydraulic valve assembly may include a solenoid and the solenoid retainer clip may be pivotally coupled to the solenoid for rotation therewith about a first rotational axis. The solenoid retainer clip may be rotatable about the first rotational axis to a retention position in which the solenoid retainer clip interacts with an adjacent structure to maintain spatial clearance between the solenoid and the adjacent structure.

In some embodiments, the solenoid may include a housing at least partially received in a valve body of the electro-hydraulic valve assembly and an electrical connector coupled to the housing and disposed outside the valve body, and in the retention position, the solenoid retainer clip may interact with the adjacent structure to maintain spatial clearance between the electrical connector and the adjacent structure.

In some embodiments, in the retention position, direct contact between the solenoid retainer clip and the adjacent structure may constrain the solenoid against rotation about the rotational axis to reduce contact between an electrical connector of the solenoid and the adjacent structure.

In some embodiments, the solenoid may include a housing at least partially received in a valve body of the electro-hydraulic valve assembly and an electrical connector coupled to the housing and disposed outside the valve body, the housing may include a plurality of cutouts axially spaced from the electrical connector, and the solenoid retainer clip may include a pair of retention fingers each received in one of the plurality of cutouts.

In some embodiments, the plurality of cutouts may be formed in the housing to receive the pair of retention fingers in one direction only.

In some embodiments, the solenoid retainer clip may include a retention tab interconnected with, and separate from, the pair of retention fingers, and in the retention position, the retention tab may be in direct contact with a face of the adjacent structure.

In some embodiments, in the retention position, the pair of retention fingers may be at least partially spaced from the face of the adjacent structure.

In some embodiments, the adjacent structure may be a detent spring of the park system that includes a first end affixed to a stationary structure.

In some embodiments, the detent spring may include a second end arranged opposite the first end that is attached to a plate of the park system, and the plate may be rotatable about a second rotational axis spaced from the first rotational axis.

In some embodiments, the second rotational axis may be perpendicular to the first rotational axis.

According to another aspect of the present disclosure, a transmission or transmission subsystem may include an electro-hydraulic valve assembly and a solenoid retainer clip. The electro-hydraulic valve assembly may include a solenoid to selectively deliver one or more fluid pressures to a movable element. The solenoid retainer clip may be pivotally coupled to the solenoid for rotation therewith about a first rotational axis.

In some embodiments, the solenoid retainer clip may be rotatable about the first rotational axis to a retention position in which the solenoid retainer clip interacts with an adjacent structure to reduce contact between an electrical connector of the solenoid and the adjacent structure.

In some embodiments, the solenoid may include a housing at least partially received in a valve body of the electro-hydraulic valve assembly, the housing may include a plurality of cutouts axially spaced from the electrical connector, and the solenoid retainer clip may include a pair of retention fingers each received in one of the plurality of cutouts.

In some embodiments, the solenoid retainer clip may include a web interconnecting the pair of retention fingers, the pair of retention fingers and the web may cooperate to define an interior face of the solenoid retainer clip, and the interior face of the solenoid retainer clip may be sized to interact with the housing only partway around the first rotational axis.

In some embodiments, the solenoid retainer clip may be rotatable about the first rotational axis to a retention position in which the solenoid retainer clip interacts with an adjacent structure to reduce contact between an electrical connector of the solenoid and the adjacent structure, and the adjacent structure may be a detent spring of a park system that includes a first end affixed to a stationary structure.

In some embodiments, the detent spring may include a second end arranged opposite the first end that is attached to a plate of the park system, and the plate may be rotatable about a second rotational axis spaced from the first rotational axis.

According to yet another aspect of the present disclosure, a park system to selectively brake an output shaft of a transmission may include an electro-hydraulic valve assembly and a solenoid retainer clip. The electro-hydraulic valve assembly may include a solenoid. The solenoid retainer clip may be pivotally coupled to the solenoid for rotation therewith about a first rotational axis. The solenoid retainer clip may be rotatable about the first rotational axis to a retention position in which direct contact between the solenoid retainer clip and an adjacent structure constrains the solenoid against rotation about the rotational axis and maintains spatial clearance between the solenoid and the adjacent structure.

In some embodiments, the solenoid may include a housing at least partially received in a valve body of the electro-hydraulic valve assembly, the housing may include a plurality of cutouts axially spaced from an electrical connector of the solenoid, and the solenoid retainer clip may include a pair of retention fingers each received in one of the plurality of cutouts and a retention tab interconnected with, and separate from, the pair of retention fingers.

In some embodiments, the plurality of cutouts may be formed in the housing to receive the pair of retention fingers in one direction only.

In some embodiments, in the retention position, the retention tab may be in direct contact with a face of the adjacent structure and the pair of retention fingers may be at least partially spaced from the face of the adjacent structure.

According to yet another aspect of the present disclosure still, a method of assembling a park system including an electro-hydraulic valve assembly including a solenoid and a solenoid retainer clip includes advancing a housing of the solenoid into a bore formed in a valve body of the electro-hydraulic valve assembly so that the housing is at least partially received in the valve body, inserting the solenoid retainer clip through the valve body into a plurality of cutouts formed in the housing so that the solenoid retainer clip is pivotally coupled to the solenoid for rotation therewith about the rotational axis, and rotating the housing and the solenoid retainer clip about the rotational axis relative to the valve body to a retention position in which the solenoid retainer clip interacts with an adjacent structure to maintain spatial clearance between the solenoid and the adjacent structure.

In some embodiments, advancing the housing into the bore may include arranging one end of the solenoid in the valve body and arranging another end of the solenoid opposite the one end that is defined by an electrical connector outside the valve body.

In some embodiments, inserting the solenoid retainer clip into the plurality of cutouts may include inserting each one of a pair of retention fingers of the solenoid retainer clip into one of the plurality of cutouts.

In some embodiments, rotating the housing and the solenoid retainer clip about the rotational axis to the retention position may include contacting the adjacent structure with a retention tab of the solenoid retainer clip to reduce contact between an electrical connector of the solenoid and the adjacent structure.

These and other features of the present disclosure will become more apparent from the following description of the illustrative embodiments.

### BRIEF DESCRIPTION OF THE DRAWINGS

The invention described herein is illustrated by way of example and not by way of limitation in the accompanying figures. For simplicity and clarity of illustration, elements illustrated in the figures are not necessarily drawn to scale. For example, the dimensions of some elements may be exaggerated relative to other elements for clarity. Further, where considered appropriate, reference labels have been repeated among the figures to indicate corresponding or analogous elements.
FIG. 1 is a diagrammatic view of a drive system for a vehicle incorporating a transmission;
FIG. 2 is a perspective view of a manifold or valve body of an electro-hydraulic circuit;
FIG. 3 is a partial diagrammatic depiction of a powertrain adapted for use in a vehicle;
FIG. 4 is a perspective view of a solenoid having an electrical connector and a solenoid retainer clip pivotally coupled to the solenoid and in contact with an adjacent structure in a retention position;
FIG. 5 is a perspective view similar to FIG. 4 showing the solenoid retainer clip unobscured in the retention position;
FIG. 6 is a perspective view of the solenoid and the solenoid retainer clip of FIG. 4 showing the solenoid retainer clip coupled to the solenoid in a first installation orientation with the adjacent structure and the electrical connector omitted for the sake of clarity;
FIG. 7 is an exploded assembly view of the solenoid and the solenoid retainer clip shown in FIG. 6;
FIG. 8 is a front elevation view of the solenoid and the solenoid retainer clip of FIG. 4 showing an angular displacement of the solenoid between an initial installation position and a final position; and
FIG. 9 is a partial sectional view showing the solenoid in its final position with the electrical connector installed and the solenoid retainer clip in the retention position.

### DETAILED DESCRIPTION

While the concepts of the present disclosure are susceptible to various modifications and alternative forms, specific embodiments thereof have been shown by way of example in the drawings and will be described herein in detail. It should be understood, however, that there is no intent to limit the concepts of the present disclosure to the particular forms disclosed, but on the contrary, the intention is to cover all modifications, equivalents, and alternatives consistent with the present disclosure and the appended claims.

References in the specification to "one embodiment," "an embodiment," "an illustrative embodiment," etc., indicate that the embodiment described may include a particular feature, structure, or characteristic, but every embodiment may or may not necessarily include that particular feature, structure, or characteristic. Moreover, such phrases are not necessarily referring to the same embodiment. Further, when a particular feature, structure, or characteristic is described in connection with an embodiment, it is submitted that it is within the knowledge of one skilled in the art to effect such feature, structure, or characteristic in connection with other embodiments whether or not explicitly described. Additionally, it should be appreciated that items included in a list in the form of "at least one A, B, and C" can mean (A); (B); (C); (A and B); (A and C); (B and C); or (A, B, and C). Similarly, items listed in the form of "at least one of A, B, or C" can mean (A); (B); (C); (A and B); (A and C); (B and C); or (A, B, and C).

In the drawings, some structural or method features, such as those representing devices, modules, instructions blocks and data elements, may be shown in specific arrangements and/or orderings for ease of description. However, it should be appreciated that such specific arrangements and/or orderings may not be required. Rather, in some embodiments, such features may be arranged in a different manner and/or order than shown in the illustrative figures. Additionally, the inclusion of a structural or method feature in a particular figure is not meant to imply that such feature is required in all embodiments and, in some embodiments, may not be included or may be combined with other features.

In some embodiments, schematic elements used to represent blocks of a method may be manually performed by a user. In other embodiments, implementation of those schematic elements may be automated using any suitable form of machine-readable instruction, such as software or firmware applications, programs, functions, modules, routines, processes, procedures, plug-ins, applets, widgets, code fragments and/or others, for example, and each such instruction may be implemented using any suitable programming language, library, application programming interface (API), and/or other software development tools. For instance, in some embodiments, the schematic elements may be implemented using Java^{™}, C++^{™}, and/or other programming languages. Similarly, schematic elements used to represent data or information may be implemented using any suitable electronic arrangement or structure, such as a register, data store, table, record, array, index, hash, map, tree, list, graph, file (of any file type), folder, directory, database, and/or others, for example.

Further, in the drawings, where connecting elements, such as solid or dashed lines or arrows, are used to illustrate a connection, relationship, or association between or among two or more other schematic elements, the absence of any such connection elements is not meant to imply that no connection, relationship, or association can exist. In other words, some connections, relationships, or associations between elements may not be shown in the drawings so as not to obscure the disclosure. In addition, for ease of illustration, a single connecting element may be used to represent multiple connections, relationships, or associations between elements. For example, where a connecting element represents a communication of signals, data or instructions, it should be understood by those skilled in the art that such element may represent one or multiple signal paths (e.g., a bus), as may be needed, to effect the communication.

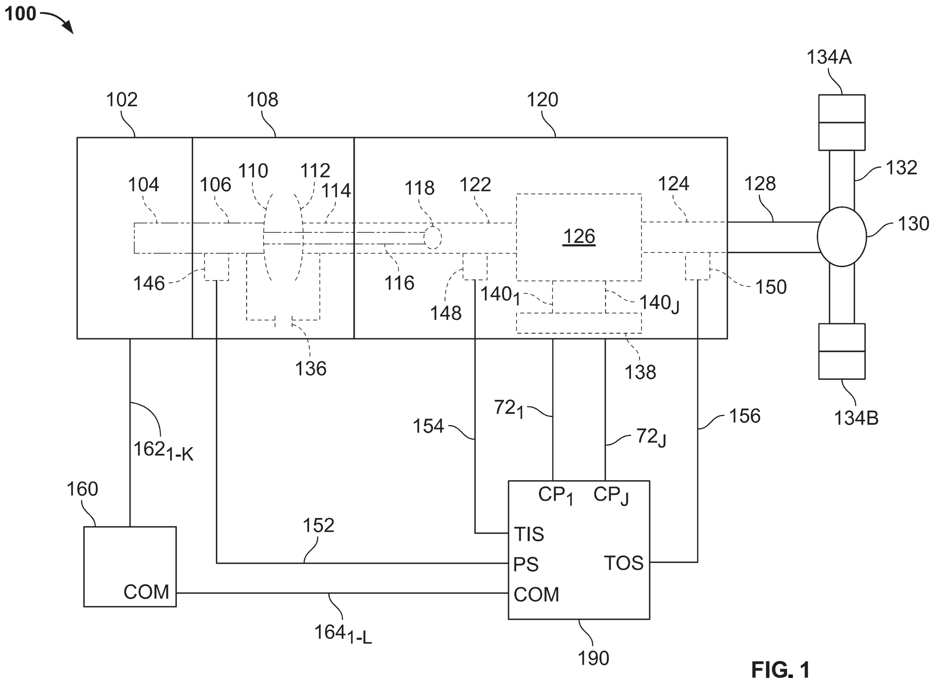

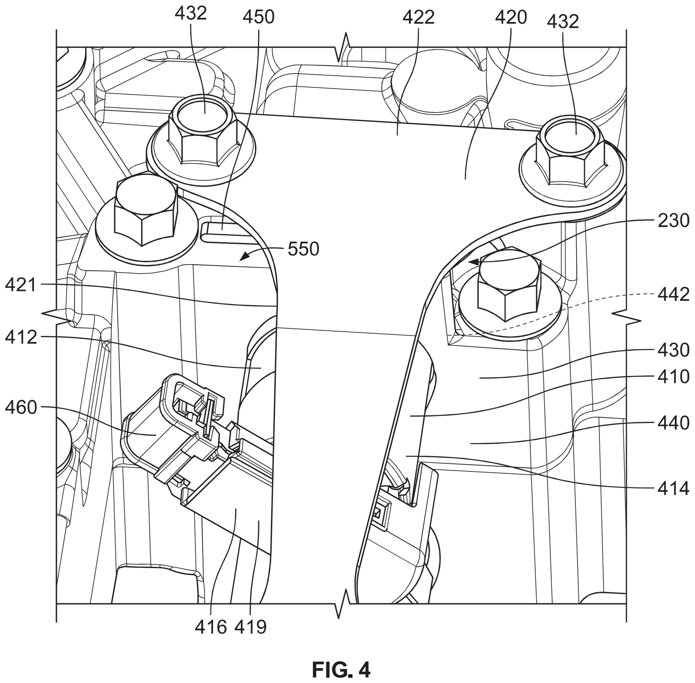

Referring now to FIG. 1, an illustrative drive system 100 for a vehicle includes a transmission 120. The transmission 120 is configured to receive rotational power supplied by a drive unit 102 and provide the rotational power to an illustrative load (e.g., an axle 132 and wheels 134A, 134B mounted thereto) in use thereof. The transmission 120 includes an input shaft 122, an output shaft 124, and, at least in some embodiments, a park system having a detent spring 420 (see FIG. 4). The input shaft 122 includes, or is otherwise embodied as, any structure or collection of structures configured to receive torque/rotational power from the drive unit 102. The output shaft 124 includes, or is otherwise embodied as, any structure or collection of structures configured to transmit torque/rotational power from the input shaft 122 to a load, which, in addition to the axle 132 and the wheels 134A, 134B, may include one or more transaxles, differentials, transfer boxes, final drives, and/or wheels, for example. The park system includes at least one component in direct contact with the output shaft 124, at least in some embodiments. The park system is configured to selectively brake the output shaft 124 during a park operational mode of the transmission 120.

In some embodiments, the park system includes a park gear assembly (not shown). The park gear assembly may include a component (e.g., a gear) arranged in contact with the output shaft 124. Additionally, in some embodiments, the park system may includes an actuator valve (not shown) coupled to the park gear assembly. The actuator valve may include, or otherwise be embodied as, any device or collection of devices having a movable valve element that is movable in response to one or more fluid pressures applied thereto to drive operation of the park system in a plurality of operating modes. In some embodiments, the actuator valve may be incorporated into an electro-hydraulic valve assembly 210 of the park system.

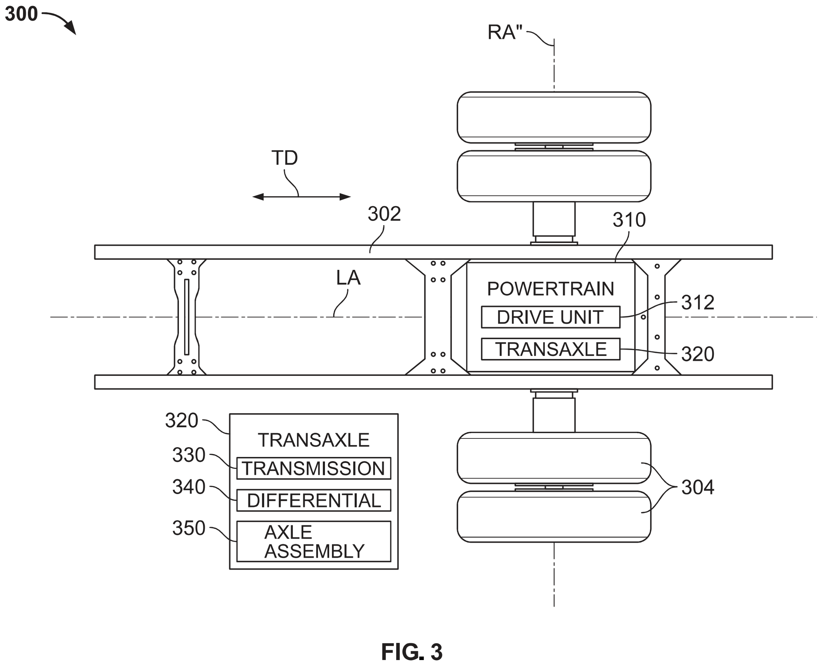

Referring now to FIG. 3, in some embodiments, the electro-hydraulic valve assembly 210 may be incorporated into a vehicle 300. In one example, the electro-hydraulic valve assembly 210 may be included in, or otherwise form a portion of, a transmission 330. In some embodiments, the electro-hydraulic valve assembly 210 incorporated into the transmission 330 may be utilized in conjunction with, and/or may be included in, a transaxle or transaxle system 320 of a powertrain 310 of the vehicle 300. Additionally, in some embodiments, the electro-hydraulic valve assembly 210 may be used to drive operation of a system separate from the park system.

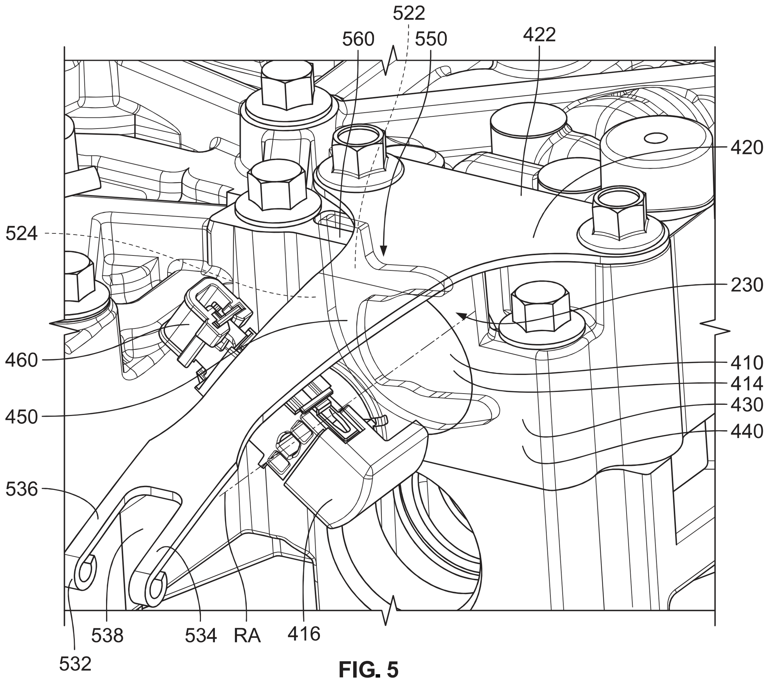

Referring now to FIG. 4, in the illustrative embodiment, the electro-hydraulic valve assembly 210 includes a solenoid 410 to selectively deliver one or more fluid pressures to a movable element (e.g., the valve element of the actuator valve) to drive operation of the park system 200 in several operating modes (e.g., a park operating mode and a non-park operating mode). In other implementations, however, the solenoid 410 may selectively deliver one or more fluid pressures to another valve element of a valve to drive operation of another system distinct from the park system. In any case, the park system includes a solenoid retainer clip 450 pivotally coupled to the solenoid 410 for rotation therewith about a rotational axis RA. As best seen in FIGS. 4 and 5, the solenoid retainer clip 450 is rotatable about the rotational axis RA to a retention position 550 in which the solenoid retainer clip 450 interacts with an adjacent structure 420 to maintain spatial clearance between the solenoid 410 and the adjacent structure 420.

Referring again to FIG. 1, it should be appreciated that the illustrative transmission 120, and the drive system 100 incorporating the transmission 120, are adapted for use in one or more vehicles employed in a variety of applications. In some embodiments, the transmission 120 may be adapted for use with, or otherwise incorporated into, fire and emergency vehicles, refuse vehicles, coach vehicles, RVs and motorhomes, municipal and/or service vehicles, agricultural vehicles, mining vehicles, specialty vehicles, energy vehicles, defense vehicles, port service vehicles, construction vehicles, and transit and/or bus vehicles, just to name a few. Additionally, in some embodiments, the transmission 120 may be adapted for use with, or otherwise incorporated into, tractors, front end loaders, scraper systems, cutters and shredders, hay and forage equipment, planting equipment, seeding equipment, sprayers and applicators, tillage equipment, utility vehicles, mowers, dump trucks, backhoes, track loaders, crawler loaders, dozers, excavators, motor graders, skid steers, tractor loaders, wheel loaders, rakes, aerators, skidders, bunchers, forwarders, harvesters, swing machines, knuckleboom loaders, diesel engines, axles, planetary gear drives, pump drives, transmissions, generators, and marine engines, among other suitable equipment.

In the illustrative embodiment, the transmission 120 includes one or more clutches (not shown). The one or more clutches may be included in, or otherwise adapted for use with, the electro-hydraulic system 138 and coupled between the input shaft 122 and the output shaft 124 to selectively transmit rotational power between the shafts 122, 124 in one or more operating modes of the transmission 120. Each of the one or more clutches may be selectively engageable in response to one or more fluid pressures applied thereto.

In the illustrative embodiment, the drive unit 102 is embodied as, or otherwise includes, any device capable of producing rotational power to drive other components (e.g., a torque converter 108 and the transmission 120) of the drive system 100 in use thereof. In some embodiments, the drive unit 102 may be embodied as, or otherwise include, an internal combustion engine, diesel engine, electric motor, or other power-generating device. In any case, the drive unit 102 is configured to rotatably drive an output shaft 104 that is coupled to an input or pump shaft 106 of a torque converter 108.

The input or pump shaft 106 of the illustrative torque converter 108 is coupled to an impeller or pump 110 that is rotatably driven by the output shaft 104 of the drive unit 102. The torque converter 108 further includes a turbine 112 that is coupled to a turbine shaft 114. In the illustrative embodiment, the turbine shaft 114 is coupled to, or integral with, the input shaft 122 of the transmission 120.

The illustrative torque converter 108 also includes a lockup clutch 136 connected between the pump 110 and the turbine 112 of the torque converter 108. The torque converter 108 is operable in a so-called "torque converter" mode during certain operating conditions, such as during vehicle launch, low speed conditions, and certain gear shifting conditions, for example. In the torque converter mode, the lockup clutch 136 is disengaged and the pump 110 rotates at the rotational speed of the drive unit output shaft 104 while the turbine 112 is rotatably actuated by the pump 110 through a fluid (not shown) interposed between the pump 110 and the turbine 112. In this operational mode, torque multiplication occurs through the fluid coupling such that the turbine shaft 114 is exposed to more torque than is being supplied by the drive unit 102. The torque converter 108 is alternatively operable in a so-called "lockup" mode during other operating conditions, such as when torque multiplication is not needed, for example. In the lockup mode, the lockup clutch 136 is engaged and the pump 110 is thereby secured directly to the turbine 112 so that the drive unit output shaft 104 is directly coupled to the input shaft 124 of the transmission 118 through the torque converter 108.

In the illustrative embodiment, the transmission 120 includes an internal pump 118 configured to pressurize, and/or distribute fluid toward, one or more fluid (e.g., hydraulic fluid) circuits thereof. In some embodiments, the pump 118 may be configured to pressurize, and/or distribute fluid toward, a main circuit, a lube circuit, an electro-hydraulic control circuit, and/or any other circuit incorporated into the electro-hydraulic system 138, for example. It should be appreciated that in some embodiments, the pump 118 may be driven by a shaft 116 that is coupled to the output shaft 104 of the drive unit 102. In this arrangement, the drive unit 102 can deliver torque to the shaft 116 for driving the pump 118 and building pressure within the different circuits of the transmission 120.

The illustrative transmission 120 includes a gearing system 126 coupled between the input shaft 122 and the output shaft 124. It should be appreciated that the gearing system 126 may include one or more gear arrangements (e.g., planetary gear arrangements, epicyclic drive arrangements, etc.) that provide, or are otherwise associated with, one or more gear ratios. When used in combination with the one or more clutches and the electro-hydraulic system 138 under a control system (not shown), the gearing system 126 may provide, or otherwise be associated with, one or more operating ranges selectable by an operator.

The output shaft 124 of the transmission 120 is illustratively coupled to, or otherwise integral with, a propeller shaft 128. The propeller shaft 128 is coupled to a universal joint 130 which is coupled to, and rotatably drives, the axle 132 and the wheels 134A, 134B. In this arrangement, the output shaft 124 drives the wheels 134A, 134B through the propeller shaft 128, the universal joint 130, and the axle 132 in use of the drive system 100. Of course, it should be appreciated that, in other embodiments, the output shaft 124 may drive the wheels 134A, 134B through another suitable mechanism and/or collection of structures.

The illustrative transmission 120 includes the electro-hydraulic system 138 that is fluidly coupled to the gearing system 126 via a number (i.e., J) of fluid paths 140₁-140_{J}, where J may be any positive integer. The electro-hydraulic system 138 is configured to receive control signals provided by various electro-hydraulic control devices (not shown), such as one or more sensors and one or more flow and/or pressure control devices, for example. In response to those control signals, and under control by the control system, the electro-hydraulic system 138 selectively causes fluid to flow through one or more of the fluid paths 140₁-140_{J} to control operation (e.g., engagement and disengagement) of one or more friction devices (e.g., the one or more clutches) included in, or otherwise adapted for use with, the gearing system 126.

Of course, it should be appreciated that the one or more friction devices may include, but are not limited to, one or more brake devices, one or more torque transmitting devices (i.e., clutches), and the like. Generally, the operation (e.g., engagement and disengagement) of the one or more friction devices is controlled by selectively controlling the friction applied by, or otherwise associated with, each of the one or more friction devices, such as by controlling fluid pressure applied to each of the friction devices, for example. In the illustrative embodiment, which is not intended to be limiting in any way, the electro-hydraulic system 138 may be coupled to, or otherwise adapted for use with, one or more brakes. Similar to the clutches, each of the one or more brakes may be controllably engaged and disengaged via fluid pressure supplied by the electro-hydraulic system 138. In any case, changing or shifting between the various gears of the transmission 120 is accomplished by selectively controlling the friction devices via control of fluid pressure within the number of fluid paths 140₁-140_{J}.

In the illustrative drive system 100 shown in FIG. 1, the torque converter 108 and the transmission 120 include a number of sensors configured to produce sensor signals that are indicative of one or more operating states of the torque converter 108 and the transmission 120, respectively. For example, the torque converter 108 illustratively includes a speed sensor 146 that is configured to produce a speed signal corresponding to the rotational speed of the pump shaft 106, which rotates at the same speed as the output shaft 104 of the drive unit 102 in use of the drive system 100. The speed sensor 146 is electrically connected to a pump speed input (i.e., PS) of a controller 190 via a signal path 152, and the controller 190 is operable to process the speed signal produced by the speed sensor 146 to determine the rotational speed of the pump shaft 106/drive unit output shaft 104.

In the illustrative drive system 100, the transmission 120 includes a speed sensor 148 that is configured to produce a speed signal corresponding to the rotational speed of the transmission input shaft 122, which rotates at the same speed as the turbine shaft 114 of the torque converter 108 in use of the system 100. The input shaft 122 of the transmission 120 may be directly coupled to, or otherwise integral with, the turbine shaft 114. Of course, it should be appreciated that the speed sensor 148 may alternatively be configured to produce a speed signal corresponding to the rotational speed of the turbine shaft 114. Regardless, the speed sensor 148 is electrically connected to a transmission input shaft speed input (i.e., TIS) of the controller 190 via a signal path 154, and the controller 190 is operable to process the speed signal produced by the speed sensor 148 to determine the rotational speed of the turbine shaft 114/transmission input shaft 124.

Further, in the illustrative system 100, the transmission 120 includes a speed sensor 150 that is configured to produce a speed signal corresponding to the rotational speed and direction of the output shaft 124 of the transmission 120. The speed sensor 150 is electrically connected to a transmission output shaft speed input (i.e., TOS) of the controller 190 via a signal path 156. The controller 190 is configured to process the speed signal produced by the speed sensor 150 to determine the rotational speed of the transmission output shaft 124.

In some embodiments, the electro-hydraulic system 138 includes one or more actuators configured to control various operations within the transmission 120. For example, the electro-hydraulic system 138 may include a number of actuators that are electrically connected to a number (i.e., J) of control outputs CP₁ - CP_{J} of the controller 190 via a corresponding number of signal paths 72₁ - 72_{J}, where J may be any positive integer as described above. Each of the actuators may receive a corresponding one of the control signals CP₁ - CP_{J} produced by the controller 190 via one of the corresponding signal paths 72₁ - 72_{J}. In response thereto, each of the actuators may control the friction applied by each of the friction devices by controlling the pressure of fluid within one or more corresponding fluid passageway 140₁ - 140_{J}, thereby controlling the operation of one or more corresponding friction devices based on information provided by the various speed sensors 146, 148, and/or 150 in use of the system 100.

In the illustrative embodiment, the drive system 100 includes a drive unit controller 160 having an input/output port (I/O) that is electrically coupled to the drive unit 102 via a number (i.e., K) of signal paths 162, wherein K may be any positive integer. The drive unit controller 160 is operable to control and manage the overall operation of the drive unit 102. The drive unit controller 160 includes a communication port (i.e., COM) which is electrically connected to a similar communication port (i.e., COM) of the controller 190 via a number (i.e., L) of signal paths 164, wherein L may be any positive integer. It should be appreciated that the one or more signal paths 164 may be referred to collectively as a data link. Generally, the drive unit controller 160 and the transmission controller 190 are operable to share information via the one or more signal paths 164. In one embodiment, for example, the drive unit controller 160 and the transmission controller 190 are operable to share information via the one or more signal paths 164 in the form of one or more messages in accordance with a Society of Automotive Engineers (SAE) J-1939 communications protocol. Of course, it should be appreciated that this disclosure contemplates other embodiments in which the drive unit controller 160 and the transmission controller 190 are operable to share information via the one or more signal paths 164 in accordance with one or more other communication protocols (e.g., from a conventional databus such as J1587 data bus, J1939 data bus, IESCAN data bus, GMLAN, Mercedes PT-CAN).

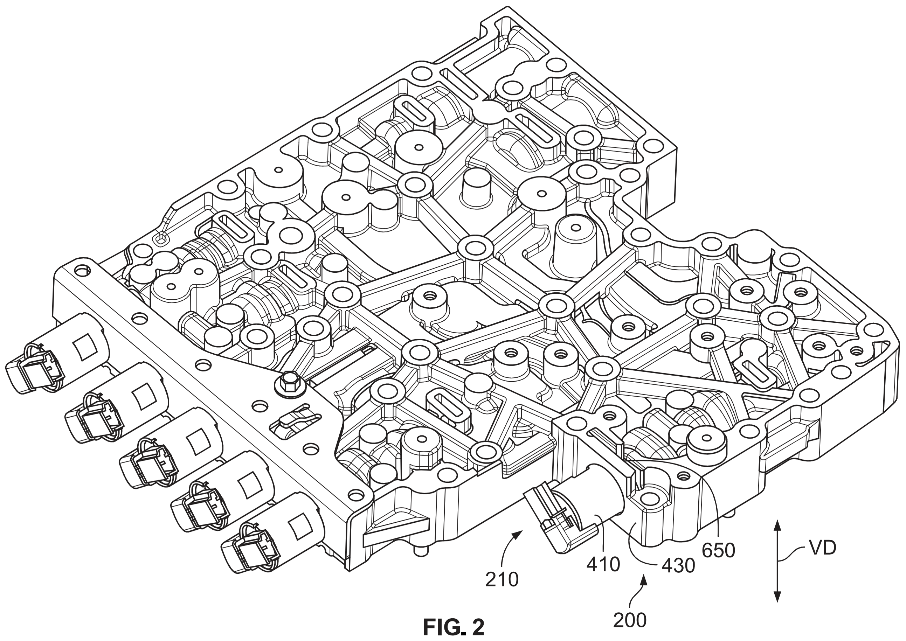

Referring now to FIG. 2, in the illustrative embodiment, the electro-hydraulic valve assembly 210 is included in an electro-hydraulic circuit 200. The solenoid 410 of the electro-hydraulic valve assembly 210 is coupled to, and at least partially received in, a manifold or valve body 430 of the electro-hydraulic circuit 200. The manifold 430 is formed to include, among other things, a network of fluid passages in fluid communication with one another to route hydraulic fluid to various devices of the electro-hydraulic circuit 200. In such embodiments, the various devices of the electro-hydraulic circuit 200 may be fluidly coupled to one another via fluid paths established by the manifold 430.

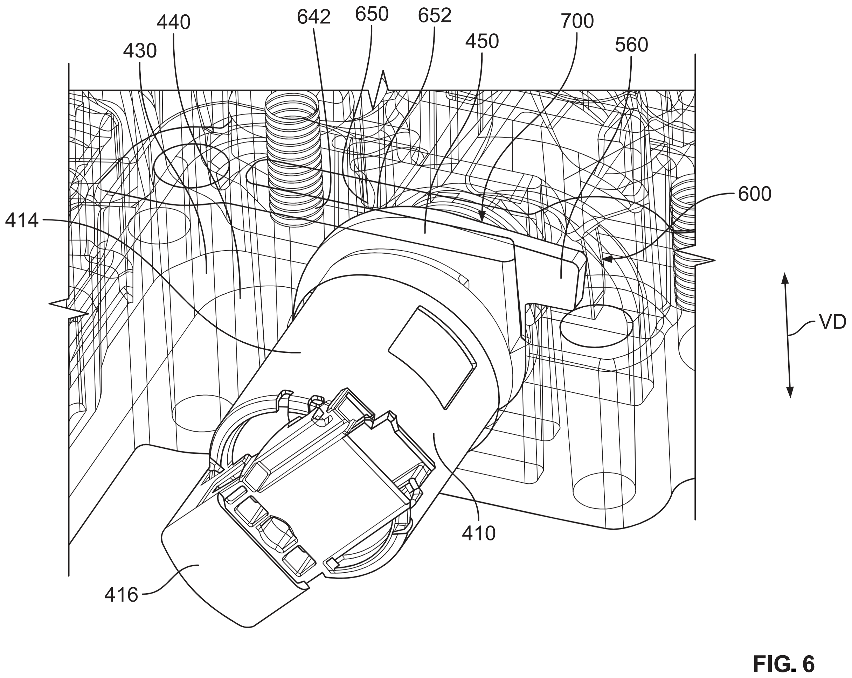

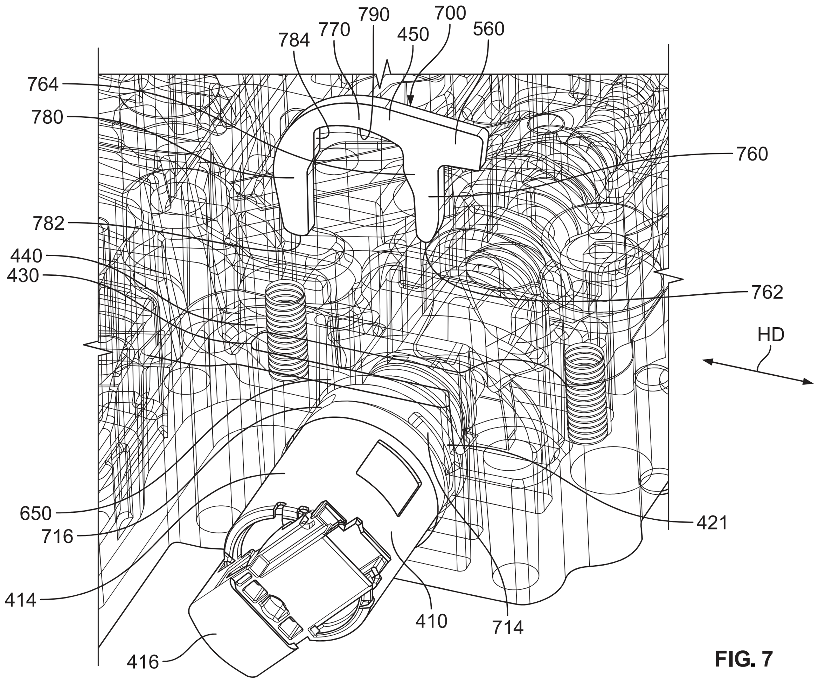

As further discussed below, a slot 650 extends through the valve body 430 (i.e., through a solenoid mounting block 440 thereof) in a vertical direction VD. As best seen in FIGS. 6 and 7, the solenoid retainer clip 450 is sized for overhead insertion into the slot 650 such that the solenoid retainer clip 450 interacts with the solenoid 410 when the solenoid retainer clip 450 is positioned in the slot 650. Furthermore, as discussed below, the solenoid retainer clip 450 is configured for rotation with the solenoid 410 about the rotational axis RA when the solenoid retainer clip 450 is positioned in the slot 650.

In some embodiments, the park system may include an actuation linkage (not shown) coupled between the actuator valve and the park gear assembly. The actuation linkage may include a number of mechanical and/or electromechanical structures that cooperate to operatively couple the actuator valve to the park gear assembly. Consequently, in some configurations, the actuator valve may drive operation of the park gear assembly through the actuation linkage to establish a plurality of operating states of the park gear assembly. In one example, through the coupling established by the actuation linkage, translation of the valve element of the actuator valve may drive operation of the park gear assembly in an engaged state and in a disengaged state. In the engaged state, at least in some embodiments, the park system resists rotation of the output shaft 124. In the disengaged state, at least in some embodiments, the park system permits rotation of the output shaft 124.

In some embodiments, the actuation linkage may include a detent spring (e.g., the detent spring 420). The detent spring may include an end coupled to a stationary structure (e.g., a stationary structure of the manifold 430) and an end coupled to a detent pin (not shown). The detent pin may be sized for positioning in one of a plurality of notches formed in a plate (not shown) of the actuation linkage in each of the engaged and disengaged states of the park gear assembly, at least in some embodiments.

Referring now to FIG. 3, the illustrative vehicle 300 includes a chassis or main frame 302, wheels 304 coupled to the chassis 302 and each configured for rotation about a rotational axis RA", and the powertrain 310 mounted to the chassis 302. In the illustrative embodiment, the powertrain 310 is embodied as, or otherwise includes, a collection of devices that are cooperatively capable of generating and transmitting rotational power to the wheels 304 of the vehicle 300 to propel the vehicle 300 in use thereof. In some embodiments, the powertrain 310 is mounted to the chassis 302 transverse to a longitudinal axis LA along which the chassis 302 extends. In those embodiments, the powertrain 310 is arranged transverse to a travel direction TD of the vehicle 300, and the powertrain 310 may be said to have a transverse mounting arrangement relative to the chassis 302. In other embodiments, however, the powertrain 310 may be mounted to the chassis 302 in another suitable manner.

In the illustrative embodiment, the powertrain 310 includes a drive unit 312 to generate rotational power. The drive unit 312 may be embodied as, or otherwise include, any device or collection of devices capable of generating rotational power that may be transmitted to the wheels 304 to drive movement of the vehicle 300. The illustrative drive unit 312 is embodied as, or otherwise includes, one or more electric motors. Because the powertrain 310 incorporates one or more electric motors or powerplants, at least in some embodiments, the vehicle 300 is embodied as, or otherwise includes, an electric vehicle. In one example, the vehicle 300 is embodied as, or otherwise includes, a medium or heavy-duty electric truck or electric bus, and the powertrain 310 is employed in lieu of one or more conventional powertrain(s) associated with one or more internal combustion engine configuration(s). In any case, operation of the drive unit 312 may be controlled by an engine control module (not shown) that includes one or more processors and one or more memory devices.

The illustrative powertrain 300 also includes the transaxle 320 coupled to the drive unit 312 to receive rotational power therefrom and transmit rotational power to the wheels 304. The transaxle 320 may be embodied as, or otherwise include, any collection of devices capable of receiving rotational power from the drive unit 312 and transmitting rotational power to the wheels 304. In the illustrative embodiment, the transaxle 320 includes a transmission 330, a differential 340 coupled to the transmission 330, and an axle assembly 350 coupled to the differential 340.

Referring now to FIGS. 4 and 5, in the illustrative embodiment, the solenoid 410 includes a housing 412 at least partially received in the valve body 430 of the electro-hydraulic valve assembly 210. In some embodiments, the valve body 430 may define, include, or otherwise form a portion of, a solenoid mounting block 440 that is formed to include a bore 442 (shown in phantom) in which the housing 410 is partially received. The illustrative solenoid 410 also includes an electrical connector 460 coupled to the housing 412. As demonstrated by FIGS. 4 and 5, when the housing 412 is disposed in the valve body 430 and the electrical connector 460 is coupled to the housing 412, the electrical connector 460 is disposed outside the valve body 430.

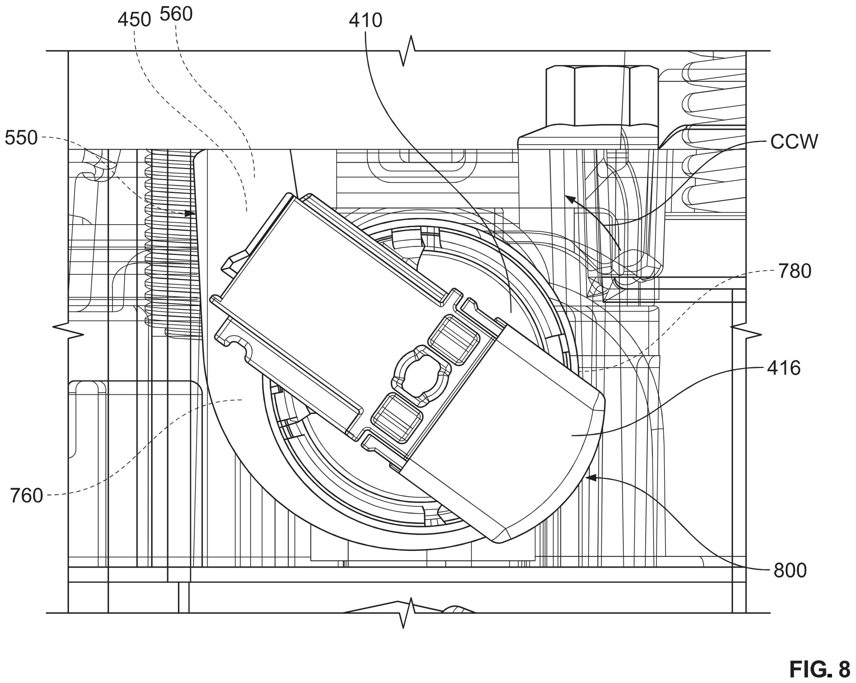

The illustrative housing 412 of the solenoid 410 includes a generally cylindrical body 414 and a connector mount 416 coupled to the body 414 and configured to secure the electrical connector 460. The connector mount 416 defines an end 419 of the solenoid 410 that is arranged opposite an end 421 thereof. The end 421 is illustratively received in the valve body 430 to allow the solenoid 410 to rotate relative to the valve body 430 about the rotational axis RA between an initial installation position 600 (see FIG. 6) and a final position 800 (see FIG. 8).

As shown in FIGS. 4, 5, and 8, when the solenoid retainer clip 450 is pivotally coupled to the solenoid 410 and the solenoid 410 is rotated about the rotational axis RA to the final position 800, the solenoid retainer clip 450 is illustratively disposed in the retention position 550. In the retention position 550, the solenoid retainer clip 450 interacts with the adjacent structure 420 to maintain spatial clearance between the connector mount 416/electrical connector 460 and the adjacent structure 420. More particularly, in the retention position 550, direct contact between the solenoid retainer clip 450 and the adjacent structure 420 constrains the solenoid 410 against rotation about the rotational axis RA to reduce and/or minimize contact between the electrical connector 460 and the adjacent structure 420.

As best seen in FIG. 5, when the solenoid retainer clip 450 is in the retention position 550, a retention tab 560 of the solenoid retainer clip 450 is in direct contact with a face 522 (shown in phantom) of the adjacent structure 420. In the illustrative arrangement, the structure 420 at least partially overlies the solenoid 410 and the solenoid retainer clip 450 such that the face 522 is arranged in confronting relation to the solenoid 410 and the solenoid retainer clip 450. As such, in the illustrative arrangement, the face 522 is disposed on an underside 524 (shown in phantom) of the adjacent structure 420.

In the illustrative embodiment, the adjacent structure 420 is a detent spring of the park system. The illustrative spring 420 includes a flared end 422 affixed to the valve body 430 using bolts 432 and a notched end 532 arranged opposite the flared end 422. In some embodiments, the notched end 532 is adapted to secure a detent pin. In any case, the illustrative detent spring 420 includes interconnected extension arms 534, 536 and a notch 538 defined therebetween at the notched end 532.

In some embodiments, the notched end 532 of the detent spring 420 is attachable to the plate of the park system via the detent pin. In such embodiments, the plate may be configured for rotation about a rotational axis spaced from the rotational axis RA. Furthermore, in such embodiments, the rotational axis may be perpendicular, or substantially perpendicular, to the rotational axis RA.

In some embodiments, the adjacent structure 420 may include, or otherwise be embodied as, another suitable structure. In those embodiments, the structure may not be integrated into, and/or may not be a component of, the park system. In one example, the structure 420 may be a component of the transmission 330. In another example, the structure 420 may be a component of the differential 340. In yet another example, the structure 420 may be a component of the axle assembly 350.

Referring now to FIGS. 6 and 7, the housing 412 of the solenoid 410 and the solenoid retainer clip 450 are shown in greater detail. As best seen in FIG. 7, proximate the end 421 of the solenoid 410, the housing 412 includes cutouts or grooves 714, 716. The cutouts 714, 716 are axially spaced from the connector mount 416/electrical connector 460 and sized to receive corresponding features (i.e., fingers) of the solenoid retainer clip 450, as further discussed below. In some embodiments, the cutouts 714, 716 are circumferentially spaced 180 degrees from one another around the housing 412. In any case, the illustrative housing 412 includes only two cutouts 714, 716.

In the illustrative arrangement, when the housing 412 of the solenoid 410 is at least partially received in the valve body 430, the cutouts 714, 716 are aligned with, and/or disposed in, the slot 650 extending through the solenoid mounting block 440 in the vertical direction VD. The slot 650 defines an opening 652 in a top surface 642 of the solenoid mounting block 440. As demonstrated by FIGS. 6 and 7, the solenoid retainer clip 450 is sized for overhead insertion through the opening 652 and into the slot 650 such that the solenoid retainer clip 450 is received by the cutouts 714, 716 disposed in the slot 650 when the solenoid 410 is in the initial installation position 600.

The illustrative solenoid retainer clip 450 includes a pair of retention fingers 760, 780 interconnected with, and separate from, the retention tab 560 as shown in FIG. 7. The retention fingers 760, 780 are sized to be received in the respective cutouts 714, 716 of the housing 412 of the solenoid 410. In the illustrative embodiment, the cutouts 714, 716 are formed in the housing 412 to receive the respective retention fingers 760, 780 in one direction/orientation only. Thus, the solenoid retainer clip 450 is insertable into the slot 650 in one direction/orientation only.

In an installation orientation 700 of the solenoid retainer clip 450 in which the solenoid retainer clip 450 is inserted through the opening 652 and into the slot 650, the finger 760 is arranged on the right and the finger 780 is arranged on the left. Further, in the installation orientation 700 of the solenoid retainer clip 450, the retention tab 560 is arranged on the right and extends outwardly away from the finger 760 in a horizontal direction HD. In the initial installation position 600 of the solenoid 410 and the installation orientation 700 of the solenoid retainer clip 450, the cutout 714 is aligned with the finger 760 and the cutout 716 is aligned with the finger 780.

The illustrative solenoid retainer clip 450 includes a web or bridge 770 interconnecting the retention fingers 760, 780. In the illustrative embodiment, the retention fingers 760, 780 and the web 770 cooperate to define a closed interior face 790 of the solenoid retainer clip 450. The interior face 790 is sized to interact with the housing 412 of the solenoid 410 only partway around the rotational axis RA. As such, when the solenoid retainer clip 450 is pivotally coupled to the solenoid 410, the solenoid retainer clip 450 does not extend all the way around the rotational axis RA.

In the illustrative embodiment, the finger 760 of the solenoid retainer clip 450 defines a curved contour along the interior face 790. The finger 760 extends (e.g., in the vertical direction VD) from the web 770 to a fingertip 762. The finger 760 includes a bulge or widened portion 764 that at least partially defines the interior face 790 and is arranged closer to the web 770 than the fingertip 762 in the vertical direction VD.

In the illustrative embodiment, the finger 780 of the solenoid retainer clip 450 defines a curved contour along the interior face 790. The finger 780 extends (e.g., in the vertical direction VD) from the web 770 to a fingertip 782. The finger 780 includes a bulge or widened portion 784 that at least partially defines the interior face 790 and is arranged closer to the web 770 than the fingertip 782 in the vertical direction VD.

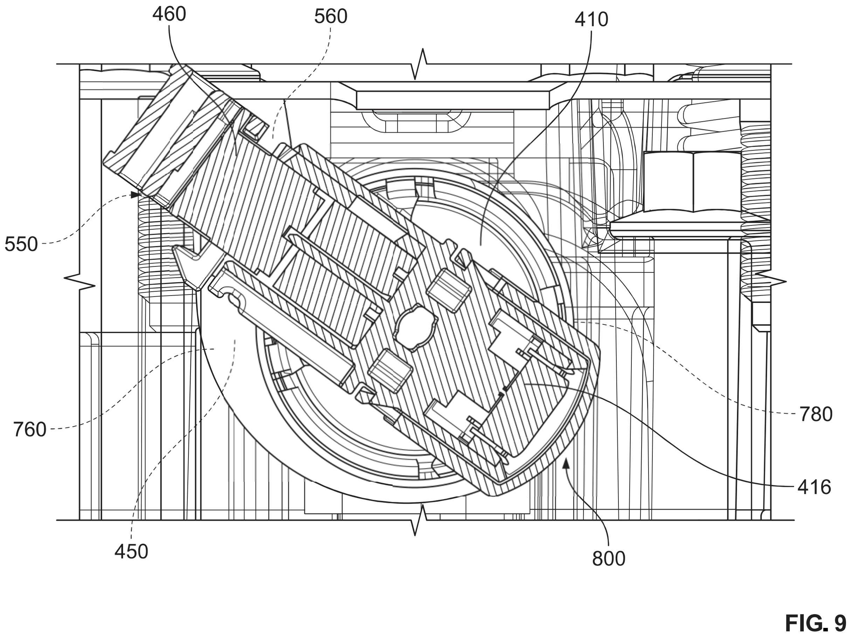

Referring now to FIGS. 8 and 9, the solenoid 410 is rotated in the counterclockwise direction as indicated by arrow CCW about the rotational axis RA from the initial installation position 600 to the final position 800. Due to the pivotal coupling between the solenoid 410 and the solenoid retainer clip 450 established via the interaction between the cutouts 714, 716 and the fingers 760, 780, rotation of the solenoid 410 causes rotation of the solenoid retainer clip 450 from the installation orientation 700 to the retention position 550. As mentioned above, in the retention position 550 of the solenoid retainer clip 450, the retention tab 560 abuts and directly contacts the detent spring 420, thereby constraining the solenoid 410 against clockwise rotation about the rotational axis RA and maintaining spatial clearance between the connector 460 and the detent spring 420.

In the illustrative embodiment, the retention fingers 760, 780 of the solenoid retainer clip 450 are at least partially spaced from the face 522 of the detent spring 420 when the solenoid retainer clip 450 is in the retention position 550. Additionally, when the solenoid retainer clip 450 is in the retention position 550, the finger 760 is arranged on the left, the finger 780 is arranged on the right, and the retention tab 560 is arranged on the left and extends outwardly away from the finger 760 in the vertical direction VD to contact the detent spring 420. In the illustrative embodiment, rotation of the solenoid 410 and the solenoid retainer clip 450 to the final position 800 and the retention position 550, respectively, is permitted only in the counterclockwise direction about the rotational axis RA.

While the disclosure has been illustrated and described in detail in the foregoing drawings and description, the same is to be considered as exemplary and not restrictive in character, it being understood that only illustrative embodiments thereof have been shown and described and that all changes and modifications that come within the spirit of the disclosure are desired to be protected.

## Claims

1. A transmission subsystem comprising:
an electro-hydraulic valve assembly including a solenoid to selectively deliver one or more fluid pressures to a movable element, and
a solenoid retainer clip pivotally coupled to the solenoid for rotation therewith about a first rotational axis.

2. The transmission subsystem of claim 1, wherein the solenoid retainer clip is rotatable about the first rotational axis to a retention position in which the solenoid retainer clip interacts with an adjacent structure to reduce contact between an electrical connector of the solenoid and the adjacent structure.

3. The transmission subsystem of claim 1 or 2, wherein:
the solenoid includes a housing at least partially received in a valve body of the electro-hydraulic valve assembly,
the housing includes a plurality of cutouts axially spaced from the electrical connector, and
the solenoid retainer clip includes a pair of retention fingers each received in one of the plurality of cutouts.

4. The transmission subsystem of claim 3, wherein:
the solenoid retainer clip includes a web interconnecting the pair of retention fingers,
the pair of retention fingers and the web cooperate to define an interior face of the solenoid retainer clip, and
the interior face of the solenoid retainer clip is sized to interact with the housing only partway around the first rotational axis.

5. The transmission subsystem of claim 2, wherein:
the adjacent structure is a detent spring of a park system that includes a first end affixed to a stationary structure; optionally wherein:
the detent spring includes a second end arranged opposite the first end that is attached to a plate of the park system, and the plate is rotatable about a second rotational axis spaced from the first rotational axis.

6. A transmission comprising:
an input shaft to receive torque from a drive unit;
an output shaft to transmit torque to a load; and
a park system to selectively brake the output shaft, the park system comprising the transmission subsystem of claim 1,
wherein the solenoid retainer clip is rotatable about the first rotational axis to a retention position in which the solenoid retainer clip interacts with an adjacent structure to maintain spatial clearance between the solenoid and the adjacent structure.

7. The transmission of claim 6, wherein:
the solenoid includes a housing at least partially received in a valve body of the electro-hydraulic valve assembly and an electrical connector coupled to the housing and disposed outside the valve body, and
in the retention position, the solenoid retainer clip interacts with the adjacent structure to maintain spatial clearance between the electrical connector and the adjacent structure.

8. The transmission of claim 6, wherein in the retention position, direct contact between the solenoid retainer clip and the adjacent structure constrains the solenoid against rotation about the rotational axis to reduce contact between an electrical connector of the solenoid and the adjacent structure.

9. The transmission of claim 6, wherein:
the solenoid includes a housing at least partially received in a valve body of the electro-hydraulic valve assembly and an electrical connector coupled to the housing and disposed outside the valve body,
the housing includes a plurality of cutouts axially spaced from the electrical connector, and
the solenoid retainer clip includes a pair of retention fingers each received in one of the plurality of cutouts.

10. The transmission of claim 9, wherein the plurality of cutouts are formed in the housing to receive the pair of retention fingers in one direction only.

11. The transmission of claim 9, wherein:
the solenoid retainer clip includes a retention tab interconnected with, and separate from, the pair of retention fingers, and
in the retention position, the retention tab is in direct contact with a face of the adjacent structure, and optionally wherein in the retention position, the pair of retention fingers are at least partially spaced from the face of the adjacent structure.

12. The transmission of claim 6, wherein the adjacent structure is a detent spring of the park system that includes a first end affixed to a stationary structure.

13. The transmission of claim 6, wherein:
the detent spring includes a second end arranged opposite the first end that is attached to a plate of the park system, and
the plate is rotatable about a second rotational axis spaced from the first rotational axis; optionally wherein the second rotational axis is perpendicular to the first rotational axis.

14. A park system to selectively brake an output shaft of a transmission, the park system comprising the transmission subsystem of claim 1, wherein the solenoid retainer clip is rotatable about the first rotational axis to a retention position in which direct contact between the solenoid retainer clip and an adjacent structure constrains the solenoid against rotation about the rotational axis and maintains spatial clearance between the solenoid and the adjacent structure.

15. The park system of claim 14, wherein:
the solenoid includes a housing at least partially received in a valve body of the electro-hydraulic valve assembly,
the housing includes a plurality of cutouts axially spaced from an electrical connector of the solenoid, and
the solenoid retainer clip includes a pair of retention fingers each received in one of the plurality of cutouts and a retention tab interconnected with, and separate from, the pair of retention fingers; optionally:
wherein the plurality of cutouts are formed in the housing to receive the pair of retention fingers in one direction only; and/or
wherein in the retention position, the retention tab is in direct contact with a face of the adjacent structure and the pair of retention fingers are at least partially spaced from the face of the adjacent structure.
